# EUROPÄISCHE PATENTSCHRIFT

(11) **EP 2 058 247 B1**
(45) Veröffentlichungstag und Bekanntmachung des Hinweises auf die Patenterteilung: **17.02.2010**
(21) Anmeldenummer: 08105390.2
(22) Anmeldetag: 19.09.2008
(51) Int. Cl.: B65G 13/06, B65G 23/08, B65G 39/02, B65G 43/08

(54) **Rolle für eine Rollenbahn**
Roller for a roller conveyor
Rouleau pour une bande de rouleaux

(30) Priorität: 08.11.2007 DE 202007015529 U
(43) Veröffentlichungstag der Anmeldung: 13.05.2009
(73) Patentinhaber: SICK AG, 79183 Waldkirch (DE)
(72) Erfinder: Märkle, Christoph, 79104 Freiburg (DE); Jaksic, Davorin, 79211 Denzlingen (DE)
(74) Vertreter: Ludewigt, Christoph

(56) Entgegenhaltungen:
- DE-A1- 10 131 019

## Beschreibung

Die Erfindung betrifft eine Rolle für eine Rollenbahn, insbesondere für Förder- und/oder Logistiksysteme mit einem integrierten kapazitiven Sensor.

In der Lager- und Fördertechnik muss zur Steuerung des Materialflusses die Anwesenheit des Fördergutes, wie z. B. Kisten und Pakete, an bestimmten Positionen der Förderstrecke auf Anwesenheit detektiert werden. Dazu werden u. a. optische, magnetische, induktive oder kapazitive Sensoren am entsprechenden Ort der Förderstrecke angebracht, um das Fördergut auf der Rollenbahn zu erfassen.

Die Detektion erfolgt mithilfe der zumeist extern an die Förderstrecke angebrachter Sensoren. Diese müssen aufwändig mit geeigneter Befestigungstechnik an die Förderstrecke montiert und mithilfe eines separaten Kabelstrangs einerseits an die Energieversorgung, andererseits an das Kommunikationsnetz (je nach Ausführung zentrale Steuereinheit oder Kettenschaltung zu den benachbarten Sensoren) angeschlossen werden. Weitere Nachteile sind der zusätzliche Platzbedarf und zusätzliche Kosten sowie aufwändige Einzeljustage der zahlreichen separat montierten Sensoren. Des Weiteren sind extern montierte Sensoren prinzipiell anfällig gegen mechanische Beeinträchtigungen durch die Umgebung, z. B. durch Verschmutzung, Beschädigung der Detektionsfläche usw. Der Wartungsaufwand wird dadurch erhöht und eine robuste Gehäuseausführung zum mechanischen Schutz der Sensoren ist notwendig, was zusätzliche Kosten verursacht. Außerdem müssen die separaten Sensoren verdrahtet werden.

Aus der DE 101 31 019 A1 ist eine Rolle für Rollenbahnen bekannt, bei der ein kapazitiver Sensor in der Rolle integriert ist. Die kapazitiven Sensoren werden dabei so montiert, dass ihr elektrisches Erfassungsfeld in Richtung des Fördergutes ausgerichtet ist. Bewegt sich nun ein Fördergut über die Rolle, erfolgt eine Verstimmung des elektrischen Feldes. Dabei erkennt der Sensor das Vorhandensein eines Fördergutes und meldet dies an seinem Schaltausgang. Nach der DE 101 31 019 A1 müssten die kapazitiven Sensoren so ausgerichtet werden, dass die Rollen ausgeblendet werden. Wie dies geschehen soll, ist nicht weiter offenbart.

Ausgehend von diesem Stand der Technik ist es Aufgabe der Erfindung, eine verbesserte Rolle mit einem kapazitiven Sensor bereitzustellen, der realisierbar ist, keine aufwändige Justage benötigt und Fördergut zuverlässig detektiert.

Diese Aufgabe wird gelöst durch eine Rolle für eine Rollenbahn mit den Merkmalen des Anspruchs 1.

Die erfindungsgemäße Rolle für eine Rollenbahn, insbesondere für Förder- und/oder Logistiksysteme weist einen integrierten kapazitiven Sensor auf und ist **dadurch gekennzeichnet, dass** auf der der Förderseite abgewandten Seite der Rolle wenigstens ein Referenzsensor angeordnet ist und dass eine Auswerteeinheit vorgesehen ist, die derart ausgebildet ist, dass aus einem Differenzsignal zwischen Sensor- und Referenzsensorsignal ein Schaltsignal bereitstellbar ist, wenn ein Objekt über die Rolle gefördert wird.

Wenn zusätzlich zu einem kapazitiven Sensor ein kapazitiver Referenzsensor vorgesehen ist, kann bei Inbetriebnahme der Rolle ein einfacher Abgleich zwischen den beiden Sensoren vorgenommen werden, so dass die Differenz der Signale dieser beiden Sensoren Null beträgt. Dazu ist keinerlei Justage oder aufwändige Ausrichtung des Sensorfeldes notwendig. Im Betrieb wird bei Anwesenheit eines Fördergutes dann der Sensor gegenüber dem Referenzsensor ein anderes Signal liefern, so dass das Differenzsignal von Null verschieden ist und in einfacher Auswertung ein Fördergut-Anwesenheitssignal ausgegeben werden kann. Eine derartige Ausbildung und das damit mögliche Detektionsverfahren für Fördergut ist von den Umgebungsbedingungen wie Luftfeuchte, Beläge auf der Rolle usw. im Wesentlichen unabhängig, denn Beeinflussungen der Messsignale werden durch den Referenzsensor kompensiert.

Damit der Sensor nur auf der Förderseite detektiert und einen möglichst großen Erfassungsbereich hat, ist der Sensor feststehend an einer Achse und möglichst nahe an der Innenseite eines umlaufenden Außenzylinders der Rolle angeordnet.

Wenn die Detektionsfläche des Sensors schmaler ist als der Bereich, in dem Fördergüter die Rolle passieren ist es vorteilhaft, weitere Sensoren in Längsrichtung der Rolle hintereinander anzuordnen, so dass der gesamte Bereich, in dem Fördergüter detektiert werden sollen, erfasst ist.

Vorteilhafterweise ist eine Auswerteeinheit für die Sensoren in der Rolle selbst integriert, so dass die Rolle eine abgeschlossene Einheit bildet.

Es sei erwähnt, dass sich in einer Rollenbahn neben den Antriebsrollen durchaus eine bestimmte Anzahl von nicht angetriebenen Rollen befinden kann. Ferner ist es auch möglich, dass über Kuppelelemente die Bewegung von elektrisch angetriebenen Antriebsrollen auf motorlose Rollen übertragen wird. Die erfindungsgemäße Rolle kann entweder eine Antriebsrolle sein, so dass sie also einen integrierten Antrieb aufweist, der an eine elektrische Energieversorgung anschließbar ist oder die erfindungsgemäße Rolle kann in passiven Rollen, also nicht angetriebenen oder motorlosen, integriert sein.

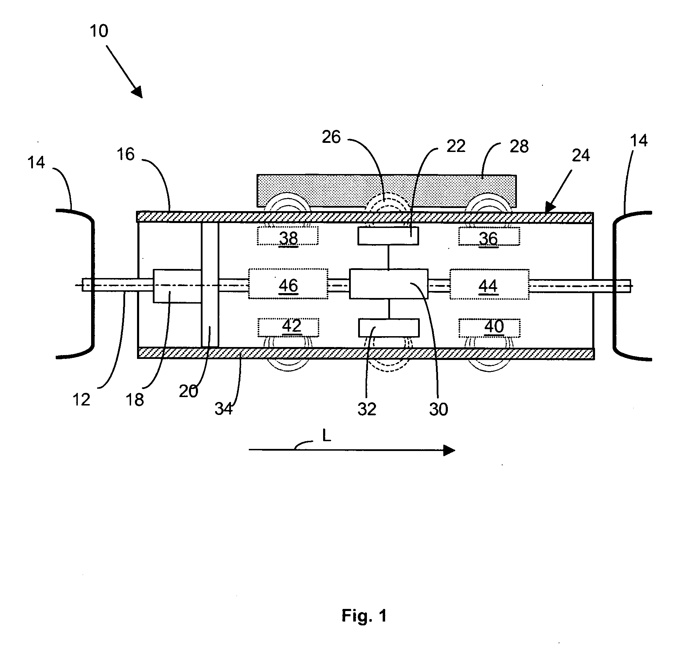

Im Folgenden wird die Erfindung anhand eines Ausführungsbeispiels unter Bezugnahme auf die Zeichnung im Einzelnen erläutert.

Die einzige Figur der Zeichnung zeigt eine schematische Darstellung eines Querschnitts durch eine erfindungsgemäße Rolle 10 für eine Rollenbahn. Die Rolle 10 weist eine feststehende Achse 12 auf, die an Lagern 14 befestigt ist. Die Rolle 10 umfasst weiter einen Außenzylinder 16, der sich um die Achse 12 drehen kann und in geeigneter Weise gelagert ist. Der Außenzylinder 16 wird angetrieben durch einen im Inneren der Rolle 10 angeordneten Motor 18 und Getriebe 20.

Des Weiteren ist im Inneren der Rolle ein kapazitiver Sensor 22 an der feststehenden Achse 12 befestigt, dessen Erfassungsbereich 26 sich an einer Förderseite 24 der Rolle 10 erstreckt. Auf der Förderseite 24 werden Objekte 28 über die Rolle 10 gefördert. Bei Anwesenheit des Objektes 28 auf der Förderseite der Rolle 10 ändern sich die kapazitiven Eigenschaften im Erfassungsbereich 26, was durch den kapazitiven Sensor 22 detektiert wird. Der Sensor 22 ist mit einer Auswerteeinheit 30 verbunden, die letztendlich ein Objektfeststellungssignal in geeigneter und nicht dargestellter Weise abgeben kann.

Erfindungsgemäß ist im Inneren der Rolle 10 auf der der Förderseite 24 abgewandten Seite der Rolle 10 wenigstens ein Referenzsensor 32 angeordnet, der ebenfalls ein kapazitiver Sensor ist und ein Referenzsensorsignal an die Auswerteeinheit 30 gibt. Da der Referenzsensor 32 lediglich die Wandung 34 des Außenzylinders 16 "sieht", sollte die Differenz zwischen einem Signal des Sensors 22 und dem Referenzsensorsignal in etwa gleich Null sein, wenn kein Objekt auf der Förderseite vorhanden ist und ungleich Null sein bei Vorhandensein eines Objektes.

Wenn der Erfassungsbereich 26 des Sensors 22 relativ klein ist im Vergleich zu dem Bereich, in dem Objekte auftreten können, ist es sinnvoll, in Längsrichtung L der Rolle 10 hintereinander weitere kapazitive Sensoren 36, 38 anzuordnen, so dass im Wesentlichen die gesamte Fördergut tragende Länge der Rolle von den Sensoren 42, 36, 38 erfasst ist. In Weiterbildung der Erfindung könnten auf der gegenüberliegenden Seite weitere Referenzsensoren 40, 42 angeordnet sein. Alle diese weiteren Sensoren können mit der einen Auswerteeinheit 30 verbunden sein oder mit zusätzlichen Auswerteeinheiten in 44, 46.

Die elektrische Energieversorgung für den Antriebsmotor 18 und für die Sensoren sowie für die Auswerteeinheit wird in geeigneter und nicht dargestellter Weise über eine entsprechende Leitung bewerkstelligt. Über ebenfalls nicht dargestellte Leitungen oder auch drahtungebunden kann das Objektfeststellungssignal nach außen an eine entsprechende Steuerung der Rollenbahn übermittelt werden.

## Patentansprüche

1. Rolle für eine Rollenbahn, insbesondere für Förder- und/oder Logistiksysteme mit einem integrierten kapazitiven Sensor, **dadurch gekennzeichnet, dass** auf der der Förderseite abgewandten Seite der Rolle wenigstens ein Referenzsensor angeordnet ist und dass eine Auswerteeinheit vorgesehen ist, die derart ausgebildet ist, dass aus einem Differenzsignal zwischen Sensor- und Referenzsensorsignal ein Schaltsignal bereitstellbar ist, wenn ein Objekt über die Rolle gefördert wird.

2. Rolle nach Anspruch 1, **dadurch gekennzeichnet, dass** der Sensor feststehend an einer Achse und möglichst nahe an der Innenseite eines umlaufenden Außenzylinders der Rolle angeordnet ist.

3. Rolle nach einem der vorhergehenden Ansprüche, **dadurch gekennzeichnet, dass** mehrere Sensoren in Längsrichtung der Rolle hintereinander angeordnet sind, so dass im Wesentlichen die gesamte Fördergut tragende Länge der Rolle von den Sensoren erfasst ist.

4. Rolle nach einem der vorhergehenden Ansprüche, **dadurch gekennzeichnet, dass** die Rolle einen integrierten Antrieb aufweist, der an eine elektrische Energieversorgung anschliessbar ist.

5. Rolle nach einem der vorhergehenden Ansprüche, **dadurch gekennzeichnet, dass** die Auswerteeinheit in die Rolle integriert ist.

## Claims

1. A roller for a roller conveyor, in particular for conveying systems and/or logistics systems, having an integrated capacitive sensor, **characterized in that** at least one reference sensor is arranged at the side of the roller remote from the conveying side; and **in that** an evaluation unit is provided which is made such that a switching signal can be provided from a difference signal between a sensor signal and a reference sensor signal when an object is conveyed over the roller.

2. A roller in accordance with claim 1, **characterized in that** the sensor is arranged in fixed position at an axle and as close as possible to the inner side of a rotating outer cylinder of the roller.

3. A roller in accordance with any one of the preceding claims, **characterized in that** a plurality of sensors are arranged sequentially in the longitudinal direction of the roller so that substantially the total length of the roller bearing conveyed product is detected by the sensors.

4. A roller in accordance with any one of the preceding claims, **characterized in that** the roller has an integrated drive which can be connected to an electrical energy supply.

5. A roller in accordance with any one of the preceding claims, **characterized in that** the evaluation unit is integrated into the roller.

## Revendications

1. Rouleau pour une voie à rouleaux, en particulier pour des systèmes de convoyage et/ou des systèmes logistiques avec un détecteur capacitif intégré,
**caractérisé en ce qu'**au moins un détecteur de référence est agencé sur le côté du rouleau détourné du côté de convoyage, et **en ce qu'**il est prévu une unité d'évaluation qui est réalisée de telle manière qu'il est possible de préparer, à partir d'un signal différentiel entre le signal de détecteur et le signal du détecteur de référence, un signal de commutation quand un objet est convoyé sur le rouleau.

2. Rouleau selon la revendication 1, **caractérisé en ce que** le détecteur est agencé de manière stationnaire sur un axe et le plus près possible de la face intérieure d'un cylindre extérieur périphérique du rouleau.

3. Rouleau selon l'une des revendications précédentes, **caractérisé en ce que** plusieurs détecteurs sont agencés les uns derrière les autres dans la direction longitudinale du rouleau, de sorte que les détecteurs couvrent sensiblement la totalité de la longueur du rouleau qui porte des produits à convoyer.

4. Rouleau selon l'une des revendications précédentes, **caractérisé en ce que** le rouleau comporte un entraînement intégré, qui peut être branché à une alimentation en énergie électrique.

5. Rouleau selon l'une des revendications précédentes, **caractérisé en ce que** l'unité d'évaluation est intégrée dans le rouleau.
